Europäisches Patentamt

European Patent Office

Office européen des brevets

(19)

(11) Publication number: **0 054 933**
**B1**

## (12) EUROPEAN PATENT SPECIFICATION

(45) Date of publication of patent specification: **11.07.84**

(51) Int. Cl.³: **C 03 B 37/04**

(21) Application number: **81110590.7**

(22) Date of filing: **18.12.81**

(54) Glass fiber forming apparatus.

(30) Priority: **19.12.80 JP 180207/80**

(43) Date of publication of application:
**30.06.82 Bulletin 82/26**

(45) Publication of the grant of the patent:
**11.07.84 Bulletin 84/28**

(84) Designated Contracting States:
**AT BE DE GB NL**

(56) References cited:
**AU - D - 663 266**
**GB - A - 782 802**
**US - A - 3 177 058**
**US - A - 3 928 009**

(73) Proprietor: **NITTO BOSEKI CO., LTD.**
**1 Aza Higashi Gonome**
**Fukushima-shi Fukushima-ken (JP)**

(72) Inventor: **Okuma, Kiwamu**
**No. 50-41, Tomita-cho Aza Kaminishida**
**Koriyama-shi Fukushima 963-05 (JP)**
Inventor: **Haga, Tsunehiro**
**No. 49-11, Aza Haradanishi Otsuki-machi**
**Koriyama-shi Fukushima 963-02 (JP)**
Inventor: **Kizara, Masao**
**No. 1-55, Kaisei 2-chome**
**Koriyama-shi Fukushima (JP)**
Inventor: **Otaki, Keiji**
**No. 20-13, Choja 2-chome**
**Koriyama-shi Fukushima (JP)**
Inventor: **Hirai, Ayahiro**
**No. 60-1, Aza Yakushido Akogashima Atami-**
**machi**
**Koriyama-shi Fukushima 969-21 (JP)**

(74) Representative: **Füchsle, Klaus, Dipl.-Ing. et al,**
**Hoffmann . Eitle & Partner Patentanwälte**
**Arabellastrasse 4**
**D-8000 München 81 (DE)**

Courier Press, Leamington Spa, England.

## Description

This invention relates to glass-fiber manufacturing apparatus comprising: a hollow rotor mounted for rotation about an axis and having a plurality of radially directed orifices in a side wall thereof from which a flange extends towards said axis, said rotor being arranged, when supplied with molten glass, to rotate and eject filaments of glass from said orifices; and an attenuating blast burner arranged to produce a flame jet adjacent said orifices externally of the rotor to cause the glass ejected therefrom to form secondary filaments.

In a known device for manufacturing glass wool by utilization of centrifugal force (see e.g. GB—A—782 802), molten glass is introduced into the inner surface of a surrounding wall of a rotor which is rotated at high speed, for instance 3000 r.p.m. As a result, molten glass is projected through a plurality of radially directed orifices in the surrounding wall of the rotor thus forming so-called primary filaments. The primary filaments are attenuated into secondary filaments by a jet stream (which may be a jet of flame or a jet of air). The secondary filaments thus formed are utilized to form glass wool.

In a device of this type, it can be observed that the filaments of molten glass projected through the orifices to the outer surface of the surrounding wall are formed into transition cones of molten glass each having a small circular base of size corresponding to the area of the respective orifice. A primary filament is formed at the tip of each transition cone of molten glass, and the primary filament thus formed is advanced into the jet stream for attenuation into a secondary filament. In order to form the secondary filament from the primary filament, any part of the jet stream whose speed is high enough to cause attenuation should not be present between the tip and the base of the transition cones of molten glass.

The presence of such a high speed jet stream in this region would break the transition cones of molten glass, and accordingly no primary filaments would be formed.

The viscosity of molten glass is greatly affected by temperature, increasing with decreasing temperature and vice versa. Accordingly, the flow rate of molten glass passing through the many orifices in the rotor wall is also greatly dependent on temperature.

If the temperature of the molten glass is decreased and accordingly the viscosity thereof in increased to too great an extent, then it cannot pass adequately through the orifices in the rotor wall, and therefore the supplied molten glass flows over the rotor surface. In this case, it is impossible to form the desired fibers.

Therefore, maintenance at a predetermined temperature of the molten glass passing through the orifices in the rotor wall is essential in order that the flow rate of molten glass projected through the orifices in the rotor wall and accordingly the diameter of primary filaments are maintained constant, and that the fluctuation in diameter of glass fibers, or secondary filaments, formed by attenuation of the primary filaments, is minimized, whereby glass wool of good quality can be produced.

The temperature of molten glass passing through the orifices in the rotor wall depends strongly on the temperature of the rotor. In other words, as the temperature of that portion of the rotor which includes the orifices is increased, the temperature of molten glass passing through the orifices is increased and as the temperature of the portion is decreased, the temperature of the molten glass is decreased.

Now as already explained, in general, a high speed jet stream is employed as a means for attenuating the primary filaments. By means of the sucking effect of the jet stream, air is sucked in through the inlet for molten glass. This air facilitates transformation of molten glass ejected from the orifices in the rotor wall into transition cones of molten glass and then into primary filaments. However, this air has the disadvantageous effect of absorbing heat from the outer surface of the rotor and making it more difficult for molten glass to pass through the orifices.

It is therefore necessary to provide means for maintaining the rotor at a predetermined high temperature. For this purpose, a variety of heating means for the rotor have been proposed. In a typical example, a burner is used to heat with a flame the rotor from outside and above. The flame is applied to the entire outer wall of the rotor including the upper end portion thereof. Therefore, in order to protect the aforementioned transition cones of molten glass from breakage, the speed of the flame from the rotor heating burner should not be so high as to cause attenuation of the filaments. Thus, a heating-only burner such as a radiation burner is often employed.

Therefore, in this case, an attenuating jet stream (high pressure and high temperature steam, in practice) device for subjecting the primary filaments to secondary attenuation must be additionally provided. As a result, a glass wool spinning machine employing such means is generally intricate. Furthermore, because a high pressure and high temperature steam generating device must be provided, the device is inefficient in that thermal energy is not effectively utilized.

In another means for heating the rotor, a high frequency coil or induction heater is provided externally of the rotor, and the induction current used to heat the rotor. However, such means is disadvantageous for the following reasons. It is necessary to provide a high frequency generating device whose capacity is relatively large to heat the rotor, and, in addition, it is necessary to provide an electromagnetic shielding means around the machine for protection against the electromagnetic radiation.

Therefore, the glass wool forming machine is rather intricate as a whole, and the operation of the machine is rather limited.

In another means for heating the rotor, a burner is disposed inside the rotor, and heats the rotor internally.

A flame is applied, however, only to the surrounding wall and to the base of the rotor; that is, the flame is not applied directly to the corner where the upper annular flange and the surrounding wall of the rotor meet.

With this conventional means for heating the rotor from inside, even if a flame is employed as the attenuating jet stream, the rotor is not heated to any great extent from outside with the attenuating flame. In order positively to form the primary filaments without breaking the transition cones, the attenuating burner is conventionally so positioned that the jet stream is not in contact with the rotor. The resulting decrease in temperature of the rotor outer surface; (cause by the air stream sucked in owing to the suction effect of the secondary attenuating jet stream as already described) is compensated by allowing a large amount of flame to contact the base and surrounding wall (wherein heat is greatly radiated) of the rotor from inside. Since the upper portion of the rotor is substantially closed by the rotor-heating burner, heat is not so greatly radiated from the upper end portion of the rotor. Therefore, heat is supplied to the upper end portion of the rotor as follows: A large quantity of flame within the rotor flows from the bottom of the rotor towards the lower end of the surrounding side wall thereof. It then rises up along the wall thus reaching the inner surface of the upper flange extending from the upper edge of the rotor. As a result, heat is transmitted through the upper flange to the corner where the upper flange and the surrounding wall of the rotor meet. In this manner, the upper end portion of the rotor is heated. Furthermore, apart of the great heat which is applied to the rotor surrounding wall by the large amount of flame is transmitted through the surrounding wall to the aforementioned corner, to heat the latter.

Accordingly, with this conventional means for heating the rotor from inside, it is necessary to supply a large quantity of fuel gas to the burner positioned within the rotor, and accordingly a special device for supplying a large quantity of fuel gas to the narrow or small space in the rotor must be provided.

In each of the above-described three typical conventional rotor heating means, even where a jet flame heat source is provided for attenuating the primary filaments, an additional large capacity heat source for heating the rotor is nevertheless required. Therefore, the conventional arrangements do not make economical use of energy.

An object of the invention is to provide glass-fiber producing apparatus which can form glass fibers of high quality in a relatively economical manner.

According to one aspect of the invention, there is provided glass fiber producing apparatus comprising: a hollow rotor mounted for rotation about an axis and having a plurality of radially directed orifices in a side wall thereof from which a flange extends towards said axis, said rotor being arranged, when supplied with molten glass, to rotate and eject filaments of glass from said orifices; and an attenuating blast burner arranged to produce a flame jet adjacent said orifices externally of the rotor to cause the glass ejected therefrom to form secondary filaments, characterized in that the flame jet contacts said side wall, for heating thereof in use of the apparatus, only over a region axially spaced from said flange, and in that a further burner is provided at a position radially inward of said flange and is arranged to produce a further flame directed generally away from said axis and over and parallel to at least one surface of said flange whereby the region where said flange meets said side wall is heated, in use of the apparatus, sufficiently to maintain ejection of glass from orifices of the rotor in said region.

Preferably, in this one aspect, said flame jet is formed in use of the apparatus with an inner conically converging region and an outer expanding region.

Preferably, in this one aspect, said blast burner is so positioned and directed that when in use only said expanding region contacts said side wall.

Preferably, in this one aspect, said side wall is cylindrical.

In one embodiment, said further burner is arranged to produce said further flame entirely outside said rotor.

In a further embodiment, said further burner is arranged to produce said further flame both inside and outside said rotor.

Preferably, said further burner is arranged to produce said further flame of such size as to contact said region where said flange meets said side wall.

A second aspect of the invention is defined in claim 8.

An embodiment of a glass fiber producing apparatus according to this invention will now be described, by way of example, with reference to the accompanying drawing, in which:

FIG. 1 is a vertical sectional view showing a rotor assembly of one embodiment of a glass fiber forming apparatus according to the invention; and

FIG. 2 is a vertical sectional view showing part of Figure 1 at an enlarged scale.

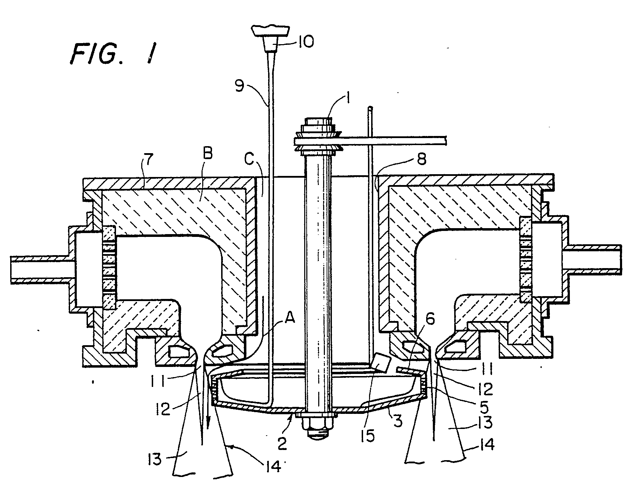

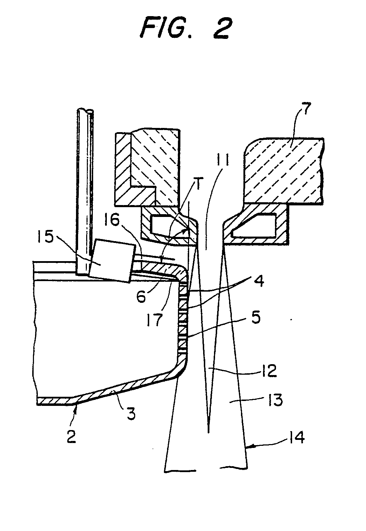

As shown in Figures 1 and 2, a hollow rotor or spinner 2 is fixedly secured to the lower end of a rotary shaft 1. The rotor 2 comprises a base 3, a cylindrical side wall 5 having a number of orifices 4 for projecting molten glass, and an upper annular flange 6 extending inwardly from the upper end of wall 5. The rotor 2 is surrounded by an attenuating blast burner 7 having an annular inner member 8. The rotor shaft 1 passes through the annular inner member 8. Molten glass 9 is supplied from a bushing or nozzle 10 through the annular inner member 8 into the rotor 2.

The attenuating blast burner 7 has a plurality of jet flame orifices 11 from each of which a jet flame 14 consisting of a relatively high speed inner conically converging portion 12 and a relatively low speed outer expanding portion 13 is produced.

These jet flames 14 are used to attenuate primary filaments (or threads) which are formed at the ends of transition cones of molten glass projected from the orifices 4 of the wall 5 of rotor 2, thus forming secondary filaments. The speed of the inner conical portion 12 is high enough to attenuate the primary filaments into secondary filaments. However, the speed of the outer portion 13 is lower to an extent such that it will not break the transition cones of molten glass from which the primary filaments are formed, by means of the sucking effect of the flame jets 14, air A is sucked in via a circular aperture C of an annular secondary attenuation member B. This air facilitates transformation of the ejected glass into primary filaments, but has the disadvantageous effect of cooling the rotor 2.

Thus, the jet flame orifices 11 of the attenuating blast burner 7 are so positioned that only the outer portions 13 of the jet flames 14 are brought into contact with the outer surface of the side wall 5 of the rotor 2 in order to heat the lower part of rotor 2 without disrupting formation of primary and secondary filaments.

To heat the upper part of rotor 2, a further heating burning 15 is provided radially inwardly of the upper annular flange 6 of rotor 2. The heating burner 15 projects a flame 16 radially outwardly of the upper annular flange 6 and in parallel with the surface thereof. The heating effect of the burner 15 is such that, as the flame 16 goes either along only the upper surface of the upper annular flange 6 or along both the upper and lower surfaces thereof sufficient heat reaches a corner 17 where the upper annular flange 6 and the side walls 5 meet.

The illustrated glass fiber forming apparatus operates as follows. The molten glass 9 supplied from a glass melting furnace (not shown) flows down at the predetermined flow rate from the nozzle 10. Immediately the molten glass 9 reaches the base 3 of the rotor 2 which is rotated by shaft 1, it is distributed over the inside of wall 5 and is then projected externally of wall 5 through orifices 4 by centrifugal force. As a result, transition cones of molten glass are formed, each having a base of size corresponding to the area of its respective orifice 4. Primary filaments form from the tops of the transition cones and reach the inner portions 12 of the jet flames. Being attenuated by the inner portions 12, the primary filaments are transformed into secondary filaments. These secondary filaments are suitable glass fibers for forming glass wool.

Since the attenuating blast burner 7 is used to attenuate the primary filaments into the secondary filaments, or glass fibers, the flame jet speed of the burner 7 should be sufficiently high. Therefore, correct positional relationship between the jet flames 14 from the jet flame orifices 11 of the burner 7 and the outer surface of the wall 5 is essential.

It is important that only the flame outer portions 13 (whose speed is sufficiently low that the transition cones of molten glass are not disrupted) are brought into contact with the outer surface of the walls. For further clarification, the case where this important requirement is not met will be described.

First, the case where the outer surface of the wall 5 is completely (from the upper end to the lower end) in the inner flame portions 12 will be described. In this case, as the molten glass projected through the orifice 4 to the outer surface of the wall by centrifugal force is immediately brought into contact with a relatively high velocity jet of flame, no transition cones of molten glass are formed, and accordingly no primary filaments are formed. That is, immediately the molten glass is projected through the orifices 4, it adheres to the outer surface of the wall 5 to form a molten glass layer thereon. Since the molten glass is continuously projected, when the molten glass layer on the outer surface of the wall 5 reaches a certain size, it is delivered out in the form of irregular particles or irregular diameter fibers. Thus it is impossible to form normal glass fibers. This is caused, as will be appreciated, by the following: as the jet flames 14 have temperature and speed which are high enough to attenuate primary filaments into secondary filaments, the jet flames 14 cause the molten glass projected through the orifice 4 to strike against the outer surface of the wall before the primary filament is formed. In other words, there is no space and time for formation of the transition cones. In order to form normal glass fibers, there must be space and time sufficient to allow formation of the primary filaments. This is one of the reasons why the positional relationship between the jet flames 14 and the wall 5 must be carefully adjusted.

On the other hand, in order to cause the jet flame 14 to attenuate the primary filaments into secondary filaments, the vertical distance between the attenuating jet flame orifices 11 and the rotor 2 should be reduced as much as possible; that is, the burner 7 and the rotor 2 must be relatively positioned in a range of distance over which the speed of the jet flames 14 is not decreased too much. As the jet flames 14 advance downwardly from the jet flame orifices 11, their speed decreases while their width increases.

In the illustrated apparatus, the lower end of the outer surface of wall 5 is so positioned that, even when the molten glass contacts the outer flame portion 13 whose width increases with decreasing speed of the jet flames 14, the primary filaments is satisfactorily formed.

In other words, the ring of jet flames 14 is set as close as possible to the lower end of the outer surface of side wall 5 in a range of distance such that, even where the lower end of the outer surface wall 5 is in contact with the outer flame portions 13, the primary filaments can be formed.

The reasons for this will now be further elucidated Molten glass is ejected externally of wall 5 through the orifices 4. If, the wall 5 is at a relatively low temperature, the temperature of the molten glass is reduced as it passes through orifices 4. As a result, the viscosity of the glass increases, and accordingly either the amount of molten glass passing through the orifices 4 is so small that it is impossible to form satisfactory glass fibers, or sometimes no molten glass at all can pass through the orifices 4.

Let us consider the case where the lower end of the outer surface of wall 5 is in contact with the outer flame portions 13 whose width increases as the jet flames 14 advance downwardly. If the speed of the outer flame portions 13 is sufficiently low that primary filaments can be formed from the transition cones of molten glass when in contact with portions 13, it is preferable that the wall 5 is set as close to the outer flame portions 13 as possible to maintain the wall at high temperature, thereby to prevent passing through the orifices 4. Under these conditions, an amount of molten glass necessary for formation of the glass fibers is allowed to pass externally of wall 5 through the orifices 4 to form the primary filaments. The filaments are subjected to secondary attenuation in the jet flames 14. Thus, secondary filaments can be obtained for forming glass wool. The behaviour of the jet flames 14 from the jet flame orifices 11 in the blast burner 7 is as follows: Immediately the jet flames 14 leave the jet flame orifices 11, i.e. when they are above the upper end of the rotor 2, the speed of the jet flames 14 is relatively low, and accordingly the outer flame portions 13 are not much developed; that is the width of the outer flame portions 13 is relatively low.

Accordingly, the upper end of the rotor 2 is not well in contact with the outer flame portions 13 as compared with the lower end, and therefore it is rather difficult to increase the temperature of the upper end.

On the other hand, the molten glass 9 is supplied to the rotor 2 as follows: The molten glass which reaches the base 3 of rotor 2 is distributed over the inner surface of wall 5 by centrifugal force. In this operation, the molten glass thus distributed is caused to rise along the inner surface of side wall 5, while heat from the glass is absorbed by the base 3 and the wall 5. Accordingly, the molten glass which reaches the upper end of the wall 5 is lower in temperature than that remaining at the lower end of the wall 5.

Thus, to the decrease of temperature of the molten glass at the upper end of the wall caused by this latter effect is added the difficulty of increasing the temperature of the upper portion of the wall as a result of the tapering shape of the jet flames 14. As a result, the upper portion of the wall 5 has a lower temperature than the lower portion.

In this connection, the case will be described where effective heating means is not employed to heat the upper end portion of rotor 2. In this case, the molten glass passing through the orifices 4 in the upper portion of the wall 5 has a lower temperature and higher viscosity than that passing through the orifices 4 positioned in the lower portion of the wall 5. Accordingly, the molten glass passing through the upper orifice 4 has a larger resistance to flow. Thus, the amount of molten glass passing through the upper orifices 4 is smaller than that passing through the lower orifices 4. Accordingly, the primary filaments formed from the upper orifices 4 are smaller in diameter than those from the lower orifices 4. The primary filaments of smaller diameter are attenuated by the parts of jet flames 14 at the points where they leave orifices 11 and are accordingly moving at high speed. On the other hand, the primary filaments of larger diameter formed in the lower portion of the wall 5 are attenuated by the relatively slow moving portions of jet flames 14. Accordingly, the secondary filaments obtained from the upper orifices 14 are much smaller in diameter than those obtained from the lower orifices 14.

As a result, even if the positional relationship between the jet flame 14 and the lower portion of the outer surface of the wall 5 is correct, absence of effective heating means for the upper portion of the rotor 2 will result in secondary filaments from the upper portion of the wall 5 of very small diameter, while the secondary filaments from the lower portion of the wall will have very large diameter. Glass wool formed with such secondary filaments is of extremly low quality, being non-uniform in fiber diameter.

Thus one important condition is correct positional relationship between the attenuating jet flames and the outer surface of the wall 5 to avoid the difficulty in forming the primary filaments caused by the breakage of the transition cones of molten glass by the attenuating jet flame. The outer flame portions 13 of low speed and high temperature, are caused to contact the lower portion of the outer surface of the wall 5. That is, the jet flames are effectively utilized to supply a larger proportion of the amount of heat which is required to maintain the rotor 2 at the requisite temperature. Another important condition is that the heating burner 15 is disposed within the upper annular flange 6 in such manner that its flame either passes over the upper surface, or over both the upper and the lower surface, of the annular flange 6 to transmit heat to at least the corner 7 where the annular flange 6 and the wall 5 meet. The flame should extend radially of the upper annular flange 6 and in parallel with its surface (having an angle T which is preferably 60° to 90°), whereby the upper end portion of the wall 5 is effectively heated with minimum use of fuel. For instance, only 3 to 4% of the amount of fuel which is required for the attenuating blast burner 7 may be required. As a result, both the upper and lower portions of the wall 5 are maintained at high temperature, the primary filaments are formed with uniform diameters, and accordingly the secondary filaments for forming glass wool are also of uniform diameter.

Although the glass fiber producing apparatus which satisfies the above-described conditions is relatively simple in construction, it can provide good quality glass wool with a small amount of fuel. Furthermore, the apparatus is simple in construction, small in size and high in operational efficiency.

In other words, there is provided a glass wool forming device in which molten glass is ejected through a number of orifices in the surrounding wall of a hollow-cylindrical rotating rotor or spinner from the outer surface of the surrounding wall by centrifugal force. Transition cones of molten glass each having a small circular base corresponding to the size of the respective orifice are formed, and a primary filament is formed at the tip of each transition cone and is then advanced into a jet flame by centrifugal force so that it is attenuated into a secondary filament. The jet flame for attenuating the primary filaments into secondary filament has only its outer region of flame, whose speed is low enough not to disrupt the transition cones of molten glass, in contact with the lower portion of the outer surface of the surrounding wall. Thus the attenuating blast burner is utilized not only to attenuate the primary filaments into the secondary filaments but also to maintain the rotor at a predetermined temperature. In order that the upper end portion of the rotor (which cannot be maintained at the necessary temperature with the attenuating blast burner) is effectively heated with a necessary and minimum amount of thermal energy, a small capacity auxiliary burner is disposed inside of the upper annular flange of the rotating spinner in such a manner that a flame from the auxiliary burner passes along the upper surface, or both the upper and lower surface, of the upper annular flange so that its heat is transmitted at least to the corner where the upper annular flange and the surrounding wall of the rotor meet and the direction of the flame is along the prolongation of the upper annular flange and is in parallel with the surface of the upper annular flange, whereby the upper and lower portions of the surrounding wall of the rotor are maintained equal in temperature.

Thus, the outer regions 13 of the jet flames 14, which is downwardly directed primarily to subject the primary filaments to secondary attenuation, (the outer regions 13 of flames being high in temperature although the lower speed) is caused to contact the lower end portion of the rotor 2, from which heat is most greatly dissipated, whereby the lower end portion of the rotor is maintained above a predetermined temperature. A necessary and minimum amount of heat for complementing the amount of heat which is transmitted upwardly through the metal wall of the rotor and is insufficient to maintain the upper end portion of the rotor at the predetermined temperature, is supplied from the further burner 15 which is disposed at a particular position near the upper end portion of the rotor. The jet flames which are used primarily for secondary attenuation are thus maximumly utilized to maintain the rotor at a predetermined temperature, so that the capacity of auxiliary heating means 15 for maintaining the temperature of the rotor uniform can be minimized.

## Claims

1. Glass fiber producing apparatus comprising: a hollow rotor (2) mounted for rotation about an axis (1) and having a plurality of radially directed orifices (4) in a side wall (5) thereof from which a flange (6) extends towards said axis (1), said rotor (2) being arranged, when supplied with molten glass (9), to rotate and eject filaments of glass from said orifices (4); and an attenuating blast burner (7) arranged to produce a flame jet (14) adjacent said orifices (4) externally of the rotor (2) to cause the glass ejected therefrom to form secondary filaments, characterized in that the flame jet (14) contacts said side wall (5) for heating thereof in use of the apparatus, only over a region axially spaced from said flange (6), and in that a further burner (15) is provided at a position radially inward of said flange (6) and is arranged to produce a further flame (16) directed generally away from said axis (1) and over and parallel to at least one surface of said flange (6) whereby the region (17) where said flange (6) meets said side wall (5) is heated, in use of the apparatus, sufficiently to maintain ejection of glass from orifices (4) of the rotor (2) in said region.

2. Apparatus according to claim 1 characterized in that said flame jet (14) is formed in use of the apparatus with an inner conically converging region (12) and an outer expanding region (13).

3. Apparatus according to claim 2 characterized in that said blast burner (7) is so positioned and directed that when in use only said expanding region (13) contacts said side wall (5).

4. Apparatus according to any one of claims 1 to 3 characterized in that said side wall (5) is cylindrical.

5. Apparatus according to any one of claims 1 to 4 characterized in that said further burner (15) is arranged to produce said further flame (16) entirely outside said rotor (2).

6. Apparatus according to any one of claims 1 to 4 characterized in that said further burner (15) is arranged to produce said further flame (16) both inside and outside said rotor (2).

7. Apparatus according to any one of claims 1 to 6 characterized in that said further burner (15) is arranged to produce said further flame (16) of such size as to contact said region (17) where said flange (6) meets said side wall (5).

8. Glass fiber forming apparatus comprising: a hollow-cylindrical rotatable rotor (2) having a base (3), a surrounding wall (5) with a plurality of molten glass ejecting orifices (4), and an upper annular flange (6) extending inwardly from the upper edge of said surrounding wall (5); and an attenuating blast burner (7) having jet flame orifices (11) adapted to produce jet flame (14) to attenuate primary filaments formed at tips of transition cones of molten glass ejected from said rotor (2) into secondary filaments, characterized in that said jet flame orifices (11) in said attenuating blast burner (7) are so positioned that only an outer region (13) of each jet flame (14), the speed of which region (13) is sufficiently low not to disrupt said transition cones of molten glass, is in contact with a lower portion of the outer surface of said surrounding wall (5), a heating burner (15) is disposed within said upper annular flange, and is arranged to project a flame (16) in a direction which is aligned with said upper annular flange (6) and is in parallel with the surface thereof, said flame (16) from said heating burner (15) heating said rotor (2) in such manner that said flame (16) passes along the upper surface, or the upper and lower surfaces, of said upper annular flange (16) and heat is transmitted at least to a corner (17) where said upper annular flange (6) meets said surrounding wall (5).

**Patentansprüche**

1. Vorrichtung zur Herstellung von Glasfasern, um fassend: einen drehbar um eine Achse (1) befestigten hohlen Rotor (2) mit mehreren, in einer Seitenwand (5) desselben angeordneten, radial gerichteten Öffnungen (4), wobei sich von der Seitenwand (5) eine Flansch (6) in Richtung der Achse (1) erstreckt und der Rotor (2) so angeordnet ist, daß er sich, wenn er mit geschmolzenem Glas versehen ist, dreht und Glasfasern aus den Öffnungen (4) ausschleudert; sowie einen Gebläsebrenner (7) zur Verdünnung, der so angeordnet ist, daß er benachbart zu den Öffnungen (4) außerhalb des Rotors (2) einen Flammenstrahl (14) erzeugt, wodurch bewirkt wird, daß das vom Rotor (2) ausgeschleuderte Glas zweite Fasern bildet, dadurch gekennzeichnet, daß der Flammenstrahl (14) beim Betrieb der Vorrichtung die Seitenwand (5) zum Aufheizen derselben nur über eine axial von dem Flansch (6) beabstandete Zone berührt, und daß ein zweiter Brenner (15) an einer Stelle radial innerhalb des Flansches (6) vorgesehen und angeordnet ist, um eine weitere, im allgemeinen von der Achse (1) weg und über und parallel zu mindestens einer Oberfläche des Flansches (6) gerichtete Flamme zur erzeugen, wodurch die Zone (17), wo der Flansch (6) auf die Seitenwand (5) trifft, im Betrieb der Vorrichtung ausreichend erhitzt wird, um eine Ausscheudern des Glases aus den Öffnungen (4) des Rotors (2) in der Zone aufrecht zu erhalten.

2. Vorrichtung nach Anspruch 1, dadurch gekennzeichnet, daß der Flammenstrahl (14) bei Betrieb der Vorrichtung mit einer inneren, konisch konvergierenden Zone (12) und einer äußeren expandierenden Zone (13) ausgebildet wird.

3. Vorrichtung nach Anspruch 2, dadurch gekennzeichnet, daß der Gebläsebrenner (7) so angeordnet und ausgerichtet ist, daß im Betrieb nur die expandierende Zone (13) die Seitenwand (5) berührt.

4. Vorrichtung nach einem der Ansprüche 1 bis 3, dadurch gekennzeichnet, daß die Seitenwand (5) zylindrisch ist.

5. Vorrichtung nach einem der Ansprüche 1 bis 4, dadurch gekennzeichnet, daß der weitere Brenner (15) angeordnet ist, um eine weitere Flamme (16) vollständig außerhalb des Rotors (2) zu erzeugen.

6. Vorrichtung nach einem der Ansprüche 1 bis 4, dadurch gekennzeichnet, daß der weitere Brenner (15) angeordnet ist, um eine weitere Flamme (16) sowohl innerhalb als auch außerhalb des Rotors (2) zu erzeugen.

7. Vorrichtung nach einem der Ansprüche 1 bis 6, dadurch gekennzeichnet, daß der weitere Brenner (15) angeordnet ist, um die weitere Flamme (16) mit solcher Größe zu erzeugen, daß sie die Zone (17) berührt, wo der Flansch (6) auf die Seitenwand (5) trifft.

8. Vorrichtung zur Herstellung von Glasfasern, umfassend: einen hohlen, zylindrischen, drehbaren Rotor (2) mit einer Basis (3), einer umgebenden Wand (5) mit mehreren, geschmolzenes Glas ausschleudernden Öffnungen (4), einen oberen ringförmigen, sich von der oberen Kante der umgebenden Wand (5) nach innen erstreckenden Flansch und einen Gebläsebrenner (7) zur Verdünnung mit Flammenstrahlöffnungen (11), die zur Erzeugung von Flammenstrahlen (14) geeignet sind, um erste, an den Spitzen von Übergangskegeln aus aus dem Rotor ausgeschleudertem Glas ausgebildete Fasern in zweite Fasern zu verdünnen, dadurch gekennzeichnet, daß die Flammenstrählöffnungen (11) des Gebläsebrenners (7) zur Verdünnung so angeordnet sind, daß nur eine äußere Zone (13) jedes Flammenstrahls (14), dessen Geschwindigkeit ausreichend niedrig ist, so daß di Übergangskegel aus geschmolzenen Glas nich zerstört werden, mit einem unteren Teil der Außenfläche der umgebenden Wand (5) in Berührung kommt, daß ein Heizbrenner (15) innerhalb des oberen ringförmigen Flansches angeordnet und so ausgerichtet ist, daß er eine Flamme (16) in eine Richtung richtet, die mit dem oberen ringförmigen Flansch (6) und parallel zu seiner Oberfläche ausgerichtet ist, wobei die Flamme (16) von dem Heizbrenner (15) den Rotor (2) so aufheizt, daß die Flamme (16) längs der Oberfläche verläuft, oder längs der oberen und unteren Flächen des oberen ringförmigen Flansches (6) verläuft und die Wärme mindestens zu einer Ecke (17) übertragen wird, wo der obere ringförmige Flansch (6) auf die Umgebungswand (5) trifft.

## Revendications

1. Appareil pour la production de fibres de verre comprenant: un rotor creux (2) monté tournant autour d'un axe (1) et ayant une pluralité d'orifices dirigés radialement (4) dans une paroi latérale (5) à partir de laquelle une bride (6) s'étend en direction de cet axe (1), ce rotor (2) étant disposé, quand il est alimenté en verre un fusion (9), pour tourner et pour éjecter des filaments de verre sortant desdits orifices (4); et un brûleur d'amincissement (7) disposé pour produire un jet de flamme (14) adjacent aux orifices (4) à l'extérieur du rotor (2) afin d'obliger le verre éjecté de ces derniers à former des filaments secondaires, caractérisé en ce que le jet de flamme (14) vient au contact de la paroi latérale (5) pour la chauffer pendant l'utilisation de l'appareil seulement dans une région espacée en sens axial de la bride (6) et en ce qu'un brûleur supplémentaire (15) est monté en position radiale intérieurement à la bride (6) et disposé pour produire une flamme supplémentaire (16) dirigée dans l'ensemble dans un sens d'éloignement de l'axe (1) sur au moins une surface de la bride (6) et parallèlement à celle-ci de façon à chauffeur pendant l'utilisation de l'appareil la région (17) où cette bride (6) rencontre la paroi latérale (5) suffisamment pour maintenir l'éjection du verre par les orifices (14) du rotor (2) dans cette région.

2. Appareil selon la revendication 1 caractérisé en ce que le jet de flamme (14) est réalisé pendant l'utilisation de l'appareil de manière à présenter une région intérieure convergente coniquement (12) et une région extérieure s'élargissant (13).

3. Appareil selon la revendication 2 caractérisé en ce que le brûleur (7) est disposé et dirigé pour que, pendant l'utilisation de l'appareil, seule la région s'élargissant (13) vienne en contact avec la paroi latérale (5).

4. Appareil selon l'une quelconque des revendications 1 à 3 caractérisé en ce que la paroi latérale (5) est cylindrique.

5. Appareil selon l'une quelconque des revendications 1 à 4 caractérisé en ce que le brûleur supplémentaire (15) est disposé pour produire la flamme supplémentaire (16) entièrement en dehors du rotor (2).

6. Appareil selon l'une quelconque des revendications 1 à 4 caractérisé en ce que le brûleur supplémentaire (15) est disposé pour produire la flamme supplémentaire (16) à la fois à l'intérieur et à l'extérieur du rotor (2).

7. Appareil selon l'une quelconque des revendications 1 à 6 caractérisé on ce que le brûleur supplémentaire (15) est disposée pour produire la flamme supplémentaire (16) à une dimension telle qu'elle vient en contact avec la région (17) où la bride (16) rencontre la paroi latérale (5).

8. Appareil pour la formation de fibres de verre comprenant: un rotor cylindrique creux tournant (2) ayant une base (3), une paroi enveloppante (5) avec une pluralité d'orifices d'éjection de verre en fusion (4), une bride annulaire supérieure (6) s'étendant vers l'intérieur à partir de bord supérieur de la paroi enveloppante (5); un brûleur d'amincissement (7) ayant des orifices (11) aptes à produire des jets de flamme (14) afin d'amincir en filaments secondaires les filaments primaires formés aux pointes des cônes de transition en verre en fusion éjectés du rotor (2) caractérisé en ce que les orifices (11) des jets de flamme du brûleur d'amincissement (7) sont disposés de telle sorte que seule une région extérieure (13) de chaque jet de flamme (14), région (13) dont la vitesse est suffisamment faible pour ne pas rompre les cônes de transition en verre en fusion, est en contact avec une partie inférieur de la surface extérieure de la paroi eveloppante (5), un brûleur chauffant (15) est disposé intérieurement à la bride annulaire supérieure et agencé pour projeter une flamme (16) dans une direction qui est en alignement avec ladite bride annulaire supérieure (6) et en parallèle avec la surface de celle-ci, cette flamme (16) du brûleur chauffant (15) chauffant le rotor (2) de telle manière que cette flamme (16) passe le long de la surface supérieure, ou des surfaces supérieure et inférieure, de la bride annulaire supérieure (16) et que de la chaleur et transmise au moins à un angle (17) où cette bride annulaire supérieure (6) rencontre la paroi enveloppante (5).

FIG. 1

## FIG. 2

2